# EUROPÄISCHE PATENTSCHRIFT

(11) **EP 1 188 296 B1**
(45) Veröffentlichungstag und Bekanntmachung des Hinweises auf die Patenterteilung: **20.04.2005**
(21) Anmeldenummer: 00956049.1
(22) Anmeldetag: 28.06.2000
(51) Int. Cl.: H04M 1/247, G06F 3/033

(54) **VERFAHREN ZUM BETRIEB EINES ELEKTRONISCHEN GERÄTES UND ELEKTRONISCHES GERÄT**
METHOD FOR OPERATING AN ELECTRONIC DEVICE AND ELECTRONIC DEVICE
PROCEDE DE FONCTIONNEMENT D'UN APPAREIL ELECTRONIQUE ET APPAREIL ELECTRONIQUE

(30) Priorität: 29.06.1999 DE 19929757
(43) Veröffentlichungstag der Anmeldung: 20.03.2002
(73) Patentinhaber: SIEMENS AKTIENGESELLSCHAFT, 80333 München (DE)
(72) Erfinder: SCHALLER, Nikolaus, D-82041 Deisenhofen (DE)
(86) Internationale Anmeldenummer: PCT/DE2000/002105
(87) Internationale Veröffentlichungsnummer: WO 2001/001658

(56) Entgegenhaltungen:
- EP-A- 0 607 731
- EP-A- 0 808 049
- EP-A- 0 844 553
- EP-A- 0 891 066
- DE-A- 4 243 563
- US-A- 5 561 753
- US-A- 5 821 936
- PATENT ABSTRACTS OF JAPAN vol. 1999, no. 10, 31. August 1999 (1999-08-31) & JP 11 134155 A (MITSUBISHI ELECTRIC CORP), 21. Mai 1999 (1999-05-21)

## Beschreibung

Die Erfindung betrifft ein Verfahren zum Betrieb eines elektronischen Gerätes nach dem Oberbegriff des Anspruchs 1 sowie ein elektronisches Gerät nach dem Oberbegriff des Anspruchs 6.

Elektronische Geräte für den kommerziellen oder privaten Gebrauch - darunter insbesondere Fernsprechendgeräte, aber auch Geräte aus dem Bereich der sogenannten Konsumelektronik, d.h. Audio- und Videogeräte, Kameras, Organizer etc. - werden heute zur Erhöhung der Vermarktungschancen zunehmend mit Zusatzfunktionen versehen, die über die betriebsnotwendige Funktionalität hinausgehen und dem Nutzer Gebrauchswertvorteile bieten sollen. Die Implementierung solcher Zusatzfunktionen ist in vielen Fällen mit einem beträchtlichen Entwicklungs- und Kostenaufwand verbunden.

Im praktischen Gebrauch derartiger elektronischer Geräte mit Zusatzfunktionalität ist jedoch vielfach eine geringe Nutzung der Zusatzfunktionen zu verzeichnen, so daß die möglichen Gebrauchswertvorteile durch den Nutzer nicht tatsächlich realisiert werden. Eine der Ursachen dafür - wenn nicht die wichtigste - ist darin zu sehen, daß die fraglichen Zusatzfunktionen dem Nutzer überhaupt nicht oder allenfalls als Schlagworte, d.h. ohne wirkliches Verständnis ihres Funktionierens und der damit erreichbaren Nutzeffekte, bekannt sind. In diesem Zusammenhang ist auch der psychologische Effekt von Bedeutung, daß einige Zeit nach dem Kauf eines neuen Gerätes das Interesse an über die Grundfunktionen hinausgehender Funktionalität deutlich nachläßt und die in der ersten Benutzungsphase nicht intensiv genutzten Zusatzfunktionen zunehmend in Vergessenheit geraten und später überhaupt nicht mehr aktiviert werden.

Speziell bei modernen Telefonen, und zwar sowohl bei leitungsgebundenen Komforttelefonen als auch Schnurlos- und Mobiltelefonen, wird eine große Anzahl von Zusatzfunktionen implementiert, um die Bedürfnisse anspruchsvoller Nutzer zu befriedigen. Hierbei handelt es sich beispielsweise um die Funktionen:
- Wahlwiderholung
- Intern-Verbindungen
- elektronisches Telefonbuch
- Makros
- Rufnummernsperren
- Taschengeldkonto
- Amtskennziffern
- temporäre Umschaltung IWV/MFV
- Rufgruppen
- MSN bei ISDN
- CLIP-Funktionen
- Rückfrage, Makeln, usw.

Die meisten Nutzer kennen und nutzen jedoch nicht alle oder nicht einmal die wesentlichsten Zusatzfunktionen. Es wird also ein hoher technischer Aufwand für letztendlich wenig genutzte Funktionen betrieben und die möglichen Gebrauchswertvorteile werden nicht realisiert.

Die Auflistung und Erläuterung der Zusatzfunktionen erfolgt in der Regel in einer Bedienungsanleitung des in Rede stehenden Gerätes (beispielsweise Telefons). Derartige Bedienungsanleitungen sind vielfach unbefriedigend aufgebaut und formuliert und werden daher von vielen Nutzern nicht oder nur oberflächlich gelesen. Bei der täglichen Nutzung des Gerätes hat der Nutzer sie zu dem nicht ständig zur Hand, und im Zusammenhang mit dem oben erwähnten Abklingen des Interesses an der Funktionalität des Gerätes mit zunehmender Besitzdauer wird die Bedienungsanleitung nach einiger Zeit in der Regel überhaupt nicht mehr in die Hand genommen. Die Bedienungsanleitung stellt somit kein geeignetes Mittel dafür dar, den Benutzer zu einer Ausschöpfung der Funktionalität seines Gerätes zu bewegen.

Aus der DE 42 43 563 A1 ist eine Vorrichtung zur Bedienung eines Geräts bekannt, bei der durch Betätigung von Eingabetasten Steuervorgänge ausgelöst werden, wobei die Häufigkeit der Benutzung erfasst und die Reihenfolge einzelner Steuerprozeduren bzw. einzelner Eingabetasten entsprechen der Häufigkeit ihrer Benutzung verändert wird, so dass am Anfang der Reihenfolge die am häufigsten benutzte Steuerprozedur bzw. der am häufigsten benutzte Steuerbefehl steht.

Aus der EP 0 808 049 A2 ist ein Bedienteil eines elektrischen Gerätes bekannt, bei dem eine Häufigkeit von durch einen Benutzer gewählten Funktionsabläufen erfasst und bei Überschreitung einer vorgegeben Häufigkeit noch nicht belegte bzw. selten genutzte Funktionstasten mit häufig genutzten Funktionsablaufen belegt werden.

Der Erfindung liegt daher die Aufgabe zugrunde, ein Verfahren zum Betrieb eines elektronischen Gerätes sowie ein insbesondere dieses Verfahren realisierendes elektronisches Gerät anzugeben, mit denen eine effizientere Nutzung der Funktionalität des Gerätes erreicht werden kann.

Diese Aufgabe wird hinsichtlich des Verfahrensaspektes durch ein Verfahren mit den Merkmalen des Anspruchs 1 und hinsichtlich ihres Vorrichtungsaspektes durch ein Gerät mit den Merkmalen des Anspruchs 6 gelöst.

Die Erfindung schließt den grundsätzlichen technischen Gedanken ein, im Gerät eine Erfassung der Aktivierung angebotener Funktionen sowie eine Auswertung des Erfassungsergebnisses vorzunehmen. Sie schließt weiter den Gedanken ein, in Abhängigkeit vom Auswertungsergebnis Hinweise auf nicht oder wenig genutzte Funktionen anzuzeigen bzw. auszugeben.

Die Auswertung der Erfassungsergebnisse erfolgt in bevorzugter Weise als Protokollierung der Benutzungshäufigkeit, d.h. der Anzahl von Aktivierungen in einem bestimmten (kalendarischen oder auf die Einschaltzeiten des Gerätes bezogenen) Zeitraum, und hierzu kann ein mit dem Betätigungselement für die jeweilige Funktion verbundener Zähler in Verbindung mit einem Zeitgeber eingesetzt werden.

In einer weiteren vorteilhaften Ausgestaltung ist es auch möglich, eine Trendauswertung dahingehend vorzunehmen, ob und inwiefern sich die Benutzungshäufigkeit einer bestimmten Funktion in vorbestimmten Zeiträumen verändert hat.

Der Hinweis auf die wenig genutzten Funktionen erfolgt in einfacher und zweckmäßiger Weise mittels vorprogrammierter kurzer Hinweistexte, die auf einem ohnehin vorhandenen alphanumerischen Display des Gerätes angezeigt und/oder bei Protokollausdrucken mit ausgedruckt und/oder akkustisch übermittelt werden. Die Hinweistexte können insbesondere Verweise auf die Bedienungsanleitung oder sonstige weitere Informationsquellen enthalten. Der ausgegebene Hinweistext kann - in Verbindung mit der oben angesprochenen Trendauswertung - auch von der Entwicklung des Nutzungsverhaltens abhängig gewählt werden; beispielsweise kann der Nutzer durch geeignete Textauswahl nach ersten Ansätzen zur Nutzung einer früher nicht genutzten Funktion ermutigt oder andernfalls bei Registrierung einer absinkenden Benutzungshäufigkeit gezielt auf die Vorteile der fraglichen Funktion hingewiesen werden.

Als Anwendungsbeispiele zur Verknüpfung bestimmter Auswertungsergebnisse hinsichtlich der Zusatzfunktionen eines modernen Telefons mit an den Benutzer gerichteten Hinweisen seien die folgenden genannt:
- keine Kurzwahlspeicher belegt → Erläuterung der Kurzwahlspeicher
- keine Telefonbucheinträge → Erläuterung des Telefonbuchkonzepts
- Wahlwiederholung noch nie benutzt → Text: "Kennen Sie die Möglichkeit, die letzte Nummer aus dem Wahlwiederholungsspeicher zu wählen? Wenn nein, schlagen Sie bitte auf Seite 7 der Bedienungsanleitung nach"
- Mobilteil noch nie gesperrt → Hinweis auf PIN-Eingabe
- erst ein Mobilteil an eine DECT-Basis angemeldet → Hinweis auf Zusatzmobilteile
- noch nie eine Intern-Verbindung aufgebaut → Hinweis auf die Kostenfreiheit von Intern Verbindungen mittels weiterer Mobilteile

Im Rahmen der Erfindung ist weiter vorgesehen, neben Zusatzfunktionen im engeren Sinne auch durch das Gerät gebotene Wahlfunktionen bzw. -möglichkeiten hinsichtlich ihrer Benutzungshäufigkeit auszuwerten. Es kann sich hierbei insbesondere um eine Auswertung der Anwahlhäufigkeit eines bestimmten Verbindungspartners aus dem elektronischen Telefonbuch handeln. Auch hier kann im Ergebnis der Auswertung ein bestimmter Hinweistext generiert werden, der z.B. zu einer häufigeren Kontaktaufnahme mit dem entsprechenden Teilnehmer oder zu einer erneuten Kontaktaufnahme nach einem längeren Zeitraum ermuntert. In diesem Sinne bietet die Erfindung auch die Möglichkeit der Realisierung eines "automatischen Beziehungsmanagers".

Das zur Ausführung der Erfindung ausgebildete Gerät weist eine Zusatz- bzw. Wahlfunktions-Erfassungseinrichtung, eine Auswertungseinrichtung zur Auswertung der Aktivierungshäufigkeit der Zusatz- bzw. Wahlfunktion(en), einen Nutzerinformationen-Speicher sowie eine Anzeige- bzw. Ausgabesteuereinrichtung zur Veranlassung der Ausgabe der erwähnten Hinweistexte auf. In Fortbildung des Vorrichtungsaspektes kann die Auswertungseinrichtung den weiter oben erwähnten Zähler und Zeitgeber und wahlweise weitere Zähler und/oder arithmetische Berechnungseinheiten zur Bereitstellung von auf unterschiedliche Zeiträume bezogenen Auswertungsergebnissen bzw. Trendaussagen aufweisen.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
Fig. 1 ein schematisches Funktions-Blockschaltbild der im Zusammenhang mit der Erläuterung der Erfindung wesentlichen Komponenten eines Komforttelefons gemäß einer ersten Ausführungsform und
Fig. 2 ein schematischen Funktions-Blockschaltbild der zur Ausführung der Erfindung wesentlichen Komponenten einer Autoradio-/CD-Wechsler-Kombination gemäß einer zweiten Ausführungsform der Erfindung.

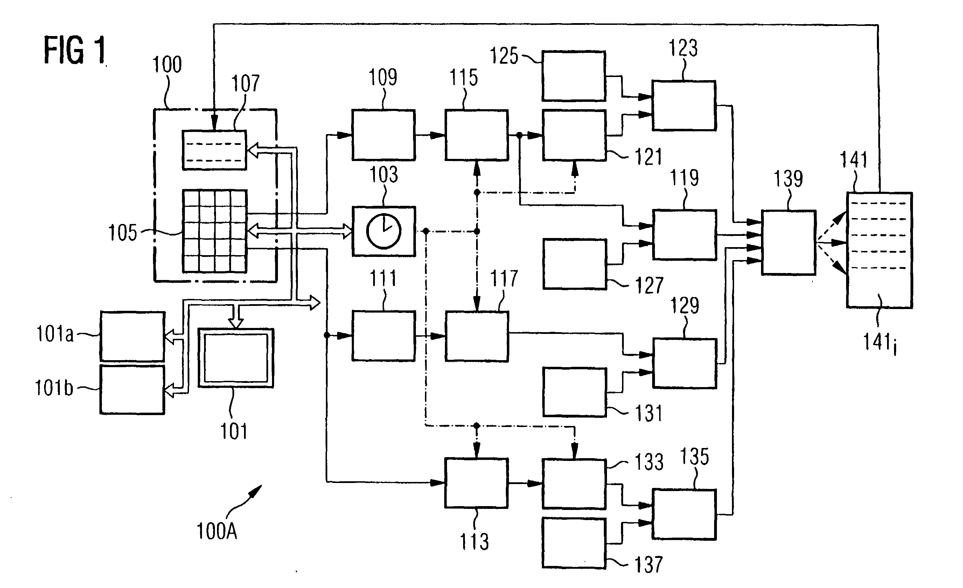

Fig. 1 zeigt in einer Prinzipdarstellung in Form eines Funktions-Blockschaltbildes eine als Teil eines Komforttelefons 100 realisierte Anordnung 100A gemäß einer ersten Ausführungsform der Erfindung. Das Komforttelefon weist einen Mikroprozessor 101 auf, dem in üblicher Weise ein Arbeitsspeicher 101a, ein Programmspeicher 101b sowie ein Zeitgeber 103 zugeordnet sind. Das Telefon 100 hat eine Eingabetastatur 105 und eine zweizeilige alphanumerische Anzeigeeinheit 107.

Die Ausführung der Erfindung wird nachfolgend am Beispiel von zwei ausgewählten Funktionen des Telefons 100 erläutert, nämlich (a) in Bezug auf die Funktion "Wahlwiederholung" und (b) in Bezug auf die Häufigkeit der Verbindungsaufnahme mit einem im elektronischen Telefonbuch eingetragenen Verbindungspartner.

Mit der Wahlwiederholungs-Taste der Eingabetastatur 105 ist ein erster Zähler 109 verbunden, und mit dem für den erwähnten Verbindungspartner spezifizierten Zielwahl-Eingabeelement ist ein zweiter Zähler 111 verbunden. Die Zähler 109 bzw. 111 zählen die Anzahl der Aktivierungen der Funktion "Wahlwiederholung" bzw. der Verbindungsaufnahme mit dem speziellen Verbindungspartner. Mit dem letztgenannten Eingabeelement ist weiterhin ein FIFO-Speicher 113 verbunden, der zudem über einen weiteren Eingang mit dem Zeitgeber 103 verbunden ist und in dem jeweils der letzte (kalendarische) Zeitpunkt einer Verbindungsaufnahme mit dem erwähnten Verbindungsteilnehmer gespeichert wird. Der Ausgang des ersten Zählers 109 ist mit einer ersten arithmetischen Berechnungseinheit 115 verbunden, und der Ausgang des zweiten Zählers 111 ist mit einer zweiten arithmetischen Berechnungseinheit 117 verbunden. Die erste und zweite Berechnungseinheit 115, 117 ist jeweils außerdem mit dem Zeitgeber 103 verbunden und berechnet die Aktivierungshäufigkeit der Funktion "Wahlwiederholung" bzw. die Anwahlhäufigkeit des spezifizierten Verbindungsteilnehmers in einem vorgegebenen Zeitraum. Dieser Zeitraum ist im Arbeitsspeicher 101a gespeichert, und der Berechnungsvorgang sowie auch die nachfolgend erläuterten Abläufe werden nach im Programmspeicher 101b abgelegten Programmabläufen ausgeführt.

Der Ausgang der ersten Berechnungseinheit 115 ist zum einen mit einer ersten Häufigkeits-Vergleichereinheit 119 und zum anderen mit dem Eingang einer dritten arithmetischen Berechnungseinheit (Trendberechnungseinheit) 121 verbunden. Die Trendberechnungseinheit 121 ist - wie die erste und zweite arithmetische Berechnungseinheit auch - zudem mit dem Zeitgeber 103 verbunden und wird durch den Mikroprozessor 101 gesteuert. Sie dient (wie der Name schon ausdrückt) zur Ermittlung eines Trends der Benutzungshäufigkeit der Funktion "Wahlwiederholung" über vorbestimmte aufeinanderfolgende Zeiträume. Der Ausgang der Trendberechnungseinheit 121 ist mit einem ersten Eingang einer Trend-Vergleichereinheit 123 verbunden, deren zweiter Eingang mit einem Trend-Referenzwertspeicher 125 verbunden ist. In ähnlicher Weise ist mit einem zweiten Eingang der oben erwähnten ersten Häufigkeits-Vergleichereinheit 119 ein erster Häufigkeits-Referenzwertspeicher 127 verbunden.

Auch der Ausgang der zweiten arithmetischen Berechnungseinheit 117 ist mit einem Eingang einer (zweiten) Häufigkeits-Vergleichereinheit 129 verbunden, deren zweiter Eingang mit einem (zweiten) Häufigkeits-Referenzwertspeicher 131 verbunden ist. Der Ausgang des FIFO-Speichers 113 ist mit einer Subtraktionsstufe 133 verbunden, die zudem mit dem Zeitgeber 103 verbunden ist und die Zeitdifferenz zwischen dem aktuellen Datum und dem Datum der letzten Zielwahl zu dem spezifizierten Verbindungsteilnehmer errechnet. Der Subtraktionsstufe 133 ist eine Zeitdifferenz-Vergleichereinheit 135 nachgeschaltet, deren zweiter Eingang mit einem Zeitdifferenz-Referenzwertspeicher 137 verbunden ist.

Die erwähnten Vergleichereinheiten 119, 123, 129 und 135 dienen im Zusammenwirken mit den jeweils zugeordneten Referenzwertspeichern 125, 127, 131 und 137 zur Ermittlung dessen, ob der jeweilige Eingangswert (Nutzungshäufigkeit, Nutzungstrendwert bzw. Zeitdifferenzwert) einen vorbestimmten Schwellwert über- bzw. unterschreitet, und zur Ausgabe eines das Vergleichsergebnis kennzeichnenden Ausgangssignals. Sie sind sämtlich mit Eingängen einer Speichersteuereinheit 139 verbunden, welche mit einem Textspeicher (Nutzerinformationenspeicher) 141 verbunden ist und - natürlich wiederum unter Steuerung durch den Mikroprozessor 101 - in Abhängigkeit von diesen jeweiligen Ausgangssignalen vorbestimmte, in den verschiedenen Speicherbereichen 141i des Textspeichers 141 gespeicherte Hinweistexte abruft und auf der Anzeigeeinheit 107 des Telefons 100 zur Anzeige bringt.

So wird beispielsweise bei Ermittlung einer eine bestimmte Referenz-Häufigkeit unterschreitenden und/oder eine absinkende Tendenz aufweisenden Häufigkeit der Nutzung der Funktion "Wahlwiederholung" (insbesondere natürlich bei völliger Nicht-Benutzung dieser Funktion) ein Hinweis auf die Vorteile dieser Funktion im Display 107 angezeigt. Wurde über einen vorbestimmten Zeitraum (Zeitdifferenz-Referenzwert) hinweg keine Verbindung mit dem spezifizierten Verbindungsteilnehmer aufgenommen und/oder unterschreitet die Häufigkeit der Verbindungsaufnahme mit diesem einen vorbestimmten Referenzwert, so wird auf dem Display 107 jeweils ein spezifischer Hinweis auf die Zweckmäßigkeit einer erneuten Verbindungsaufnahme mit diesem Teilnehmer (beispielsweise einem wichtigen Geschäftspartner) angezeigt.

In ähnlicher Weise wie oben beschrieben können Zeitdifferenz-, Häufigkeits- bzw. Trendauswertungen in Bezug auf die Nutzung weiterer Funktionen des Telefons 100 vogenommen und im Ergebnis der Auswertung jeweils spezifische Hinweistexte angezeigt werden. Bei einer Telefonanlage mit Protokollausdruck ist zudem ein Ausdruck der entsprechenden Hinweise möglich und schließlich ist (besonders zweckmäßig bei einem Telefon mit Anrufbeantworterfunktion) auch eine Textansage realisierbar. Für die in Fig. 1 skizzierte Ausführung in einem Komforttelefon ist die Benutzung kalendarischer Zeiträume (Tage/Wochen/Monate) ohne Bezugnahme auf eine Geräte-Betriebsdauer oder reale Nutzungsdauer zweckmäßig. Es vesteht sich von selbst, daß diese Ausführung auch in einem Schnurlostelefon oder Mobiltelefon in gleicher Weise möglich ist.

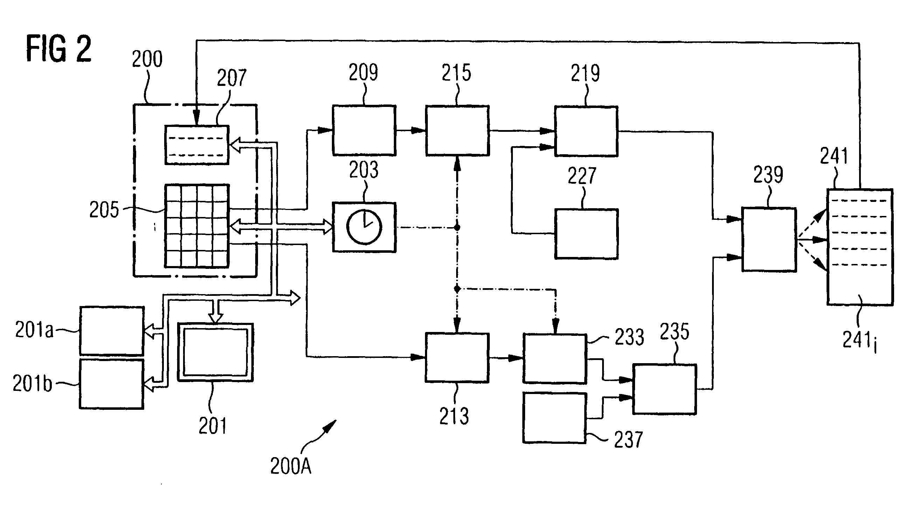

In Fig. 2 ist am Beispiel einer Autoradio-/CD-Wechsler-Kombination die Ausführung der Erfindung in einem anderen Gebiet als demjenigen der Kommunikationstechnik dargestellt. Auch hier sind nur die im Zusammenhang mit der Erläuterung der Erfindung wichtigen Komponenten dargestellt; im übrigen wird ein herkömmlicher Geräteaufbau vorausgesetzt. Die Funktionskomponenten dieser Anordnung entsprechen zu einem großen Teil denen der ersten Ausführungsform, sind insoweit mit an Fig. 1 angelehnten Bezugsziffern bezeichnet und werden nachfolgend nicht nochmals erläutert.

Als Beispiele für gebrauchswertsteigernde Zusatzfunktionen sind hier (a) die Funktion "Random" (Mischung der Titel einer CD nach dem Zufallsprinzip) sowie (b) Anwahl verschiedener CDs aus dem Wechsler herausgegriffen, und es wird eine gegenüber den Auswertungsmodi der ersten Ausführungsform vereinfachte Auswertung beschrieben. (Aufgrund dessen sowie des Umstandes, daß funktionsähnliche Komponenten auch ähnliche Bezugsziffern wie in Fig. 1 erhalten sollen, schließen die Bezugsziffern in Fig. 2 nicht mehr lückenlos aneinander an.)

Die Autoradio-/CD-Wechsler-Kombination 200 hat in üblicher Weise - und grundsätzlich analog zum Komforttelefon nach Fig. 1 - einen auch zur Programmablaufsteuerung dienenden Mikroprozessor 201, Arbeits- und Programmspeicher 201a, 201b und Zeitgeber 203 und natürlich eine Bedientastatur 205 und eine alphanumerische Anzeigeeinheit 207. Eine erste Gruppe wesentlicher Elemente der Anordnung 200A zur Ausführung der Erfindung sind hier ein mit der Bedientastatur 205 verbundener Zähler 209 zur Zählung der Bedienvorgänge zur Aktivierung der "Random"-Funktion, eine dem Zähler 209 nachgeschaltete und zudem mit dem Zeitgeber 203 verbundene arithmetische Berechnungseinheit 215 zur Berechnung der relativen Benutzungshäufigkeit der genannten Funktion, eine mit dem Ausgang der Berechnungseinheit 215 verbundene Häufigkeits-Vergleichereinheit 219, an deren zweiten Eingang ein Häufigkeits-Referenzwertspeicher 227 angeschlossen ist.

Eine zweite Gruppe wesentlicher Funktionskomponenten wird durch einen einerseits mit der Eingabetastatur 205 und andererseits mit dem Zeitgeber 203 verbunden FIFO-Speicher 213 zur Registrierung des jeweils letzten Anwahlvorganges für eine bestimmte CD-Position im Wechslerteil, eine mit dem Ausgang des FIFO-Speichers 213 und zudem ebenfalls mit dem Zeitgeber 203 verbundene Subtraktionsstufe 233 zur Bestimmung des seit dem letzten entsprechenden Anwahlvorgang verstrichenen Zeitraums, eine mit dem Ausgang der Subtraktionsstufe 233 verbundene Zeitdifferenz-Vergleichereinheit 235 und einen mit deren zweitem Eingang verbundenen Zeitdifferenz-Referenzwertspeicher 237 gebildet. Hinsichtlich der verbleibenden Komponenten Speichersteuereinheit 239 und Textspeicher 241 wird auf die obige Beschreibung zu Fig. 1 verwiesen.

Bei der zuletzt beschriebenen Anordnung wird also der Benutzer der Autoradio-/CD-Wechsler-Kombination 200 über das Display 207 mit entsprechenden Hinweisen versorgt, wenn er die "Random"-Funktion seines Gerätes in einem vorgegebenen Betriebszeitraum nicht oder sehr selten benutzt hat oder wenn er eine bestimmte CD im Wechsler sehr lange nicht angewählt hat. Der letztere Hinweis kann ihm eine Anregung dafür geben, in dieses Fach eine andere CD einzulegen, die seinem (möglicherweise gewandelten) Geschmack besser entspricht.

Die Ausführung der Erfindung ist nicht auf die beschriebenen Beispiele beschränkt, sondern auch in einer Vielzahl von Abwandlungen für andere Geräte und Anwendungen möglich.

## Patentansprüche

1. Verfahren zum Betrieb eines elektronischen Gerätes (100; 200), insbesondere eines Fernsprechendgerätes, mit einer Eingabeeinrichtung (105; 205) und einer Anzeige- oder Ausgabeeinrichtung (107; 207), welches mindestens eine über die Eingabeeinrichtung aktivierbare Zusatz- oder Auswahlfunktion aufweist, wobei jede Aktivierung einer vorbestimmten Zusatz- oder Auswahlfunktion erfaßt wird,
**dadurch gekennzeichnet, daß**
- das Erfassungsergebnis einer vorbestimmten Auswertung zur Ermittlung wenig genutzter Zusatz- oder Auswahlfunktionen unterzogen wird,
- in Abhängigkeit vom Auswertungsergebnis ein Hinweistext auf die nicht oder wenig genutzten Zusatz- oder Auswahlfunktionen angezeigt oder ausgegeben wird.

2. Verfahren nach Anspruch 1,
**dadurch gekennzeichnet, daß**
der Schritt der Auswertung die Ermittlung der Aktivierungshäufigkeit der Zusatz- oder Auswahlfunktion in einem vorbestimmten Zeitraum oder Betriebszeitraum einschließt.

3. Verfahren nach Anspruch 2,
**dadurch gekennzeichnet, daß**
die Auswertung eine Trendermittlung bezüglich der Aktivierungshäufigkeit in einem vorbestimmten Zeitraum oder Betriebszeitraum einschließt.

4. Verfahren nach einem der vorangehenden Ansprüche,
**dadurch gekennzeichnet, daß**
der Schritt der Auswertung die Ermittlung eines Zeitraumes einschließt, der seit der letzten Aktivierung der Zusatz- oder Auswahlfunktion verstrichen ist.

5. Verfahren nach einem der Ansprüche 2 bis 4,
**dadurch gekennzeichnet, daß**
der Schritt der Auswertung einen Vergleich der ermittelten Aktivierungshäufigkeit und/oder des ermittelten Trends und/oder des ermittelten Zeitraumes mit einem vorbestimmten entsprechenden Referenzwert einschließt.

6. Elektronisches Gerät (100; 200), insbesondere Fernsprechendgerät, mit einer Eingabeeinrichtung (105; 205) und einer Anzeige- oder Ausgabeeinrichtung (107; 207), das mindestens eine über die Eingabeeinrichtung aktivierbare Zusatz- oder Auswahlfunktion aufweist, wobei eine Zusatzfunktions-Erfassungseinrichtung (103; 203) zur Erfassung jeder Aktivierung der oder einer bestimmten Zusatz- oder Auswahlfunktion sowie eine mit dem Ausgang der Zusatzfunktions-Erfassungseinrichtung sowie einem Zeitgeber (103;203) verbundene Auswertungseinrichtung (109 bis 135; 209 bis 235) zur Ermittlung einer die Anzahl der Aktivierungen in einem vorbestimmten Zeitraum kennzeichneneden Größe und zur Ausgabe eines entsprechenden Ausgangsignals vorgesehen sind, **gekennzeichnet durch**
- einem Nutzerinformationenspeicher (141; 241) zur Speicherung mindestens eines Hinweistextes zu der oder jeder Zusatz- oder Auswahlfunktion, wobei der Hinweistext sich auf nicht oder wenig genutzte Zusatz- oder Auswahlfunktionen bezieht,
- einer Speichersteuereinrichtung (139; 239) zur Adressierung des Nutzerinformationenspeichers zur Ausgabe des oder eines Hinweistextes auf nicht oder wenig genutzte der oder jeder Zusatz- oder Auswahlfunktionen in Abhängigkeit vom Ausgangssignal der Auswertungseinrichtung über die Anzeigeeinrichtung.

7. Gerät nach Anspruch 6,
**dadurch gekennzeichnet, daß**
die Zusatzfunktions-Erfassungseinrichtung einen Zähler (109, 111; 209) zur Erfassung der Anzahl der Aktivierungen der oder jeder Zusatz- oder Auswahlfunktion und einer dem Zähler nachgeschalteter und mit dem Zeitgeber (103; 203) verbundene arithmetische Berechnungseinheit (115, 117; 215) zur Ermittlung der Aktivierungshäufigkeit der Zusatz- oder Auswahlfunktion in einem vorbestimmten Zeitraum aufweist.

8. Gerät nach Anspruch 6 oder 7,
**dadurch gekennzeichnet, daß**
die Auswertungseinrichtung einen Speicher (113; 213) zur Registrierung des jeweils letzten Aktivierungszeitpunktes der Zusatz- oder Auswahlfunktion sowie eine mit diesem Speicher und dem Zeitgeber (103; 203) verbundene Subtraktionsstufe (133; 233) zur Ermittlung des seit der letzten Aktivierung verstrichenen Zeitraumes aufweist.

9. Gerät nach einem der Ansprüche 6 bis 8,
**dadurch gekennzeichnet, daß**
die Auswertungseinrichtung eine Vergleichereinheit (119, 123, 129, 135; 219, 235) in eingangsseitiger Verbindung mit einem Referenzwertspeicher (127, 121, 131, 133; 227, 237) zum Vergleich der die Anzahl der Aktivierungen zu einem vorbestimmten Zeitraum in Beziehung setzenden Größe und zur Ausgabe eines entsprechenden Steuersignals an die Speichersteuereinrichtung (139; 239) aufweist.

## Claims

1. Method for operating an electronic device (100; 200), particularly a telephone terminal, with an input device (105; 205) and a display or output device (107; 207) which exhibits at least one supplementary or selection function which can be activated via the input device, each activation of a predetermined supplementary or selection function being detected, **characterized in that**
- the result of the detection is subjected to a predetermined evaluation for determining little used supplementary or selection functions,
- a reference text to the supplementary or selection functions not used or little used is displayed or output in dependence on the result of the evaluation.

2. Method according to Claim 1, **characterized in that** the step of evaluation includes the determination of the frequency of activation of the supplementary or selection function in a predetermined period or operating period.

3. Method according to Claim 2, **characterized in that** the evaluation includes a determination of the trend of the frequency of activation in a predetermined period or operating period.

4. Method according to one of the preceding claims, **characterized in that** the step of evaluation includes the determination of a period which has elapsed since the last activation of the supplementary or selection function.

5. Method according to one of Claims 2 to 4, **characterized in that** the step of evaluation includes a comparison of the frequency of activation determined and/or of the trend determined and/or of the period determined, with a predetermined corresponding reference value.

6. Electronic device (100; 200), particularly a telephone terminal, with an input device (105; 205) and a display or output device (107; 207) which exhibits at least one supplementary or selection function which can be activated via the input device, in which a supplementary function detection device (103; 203) for detecting each activation of the or a particular supplementary or selection function and an evaluation device (109 to 135; 209 to 235), connected to the output of the supplementary function detection device and to a timer (103; 203), for determining a quantity characterizing the number of activations in a predetermined period and for outputting a corresponding output signal are provided, **characterized by**
- a user information memory (141; 241) for storing at least one advisory text for the or each supplementary or selection function, the advisory text relating to supplementary or selection functions which are not used or little used,
- a memory control device (139; 239) for addressing the user information memory for outputting the or an advisory text to the or each supplementary or selection function not used or only little used, in dependence on the output signal of the evaluation device via the display device.

7. Device according to Claim 6, **characterized in that** the supplementary function detection device exhibits a counter (109, 111; 209) for detecting the number of activations of the or each supplementary or selection function and an arithmetic calculating unit (115, 117; 215), following the counter and connected to the timer (103; 203), for determining the frequency of activation of the supplementary or selection function in a predetermined period.

8. Device according to Claim 6 or 7, **characterized in that** the evaluation device exhibits a memory (113; 213) for registering the last activation time of the supplementary or selection function in each case and a subtraction stage (133; 233), connected to this memory and to the timer (103; 203), for determining the period which has elapsed since the last activation.

9. Device according to one of Claims 6 to 8, **characterized in that** the evaluation device exhibits a comparator unit (119, 123, 129, 135; 219, 235), which is connected at its input to a reference value memory (127, 121, 131, 133; 227, 237), for comparing the quantity relating the number of activations to a predetermined period and for outputting a corresponding control signal to the memory control device (139; 239).

## Revendications

1. Procédé pour le fonctionnement d'un appareil (100 ; 200) électronique, en particulier d'un terminal téléphonique, avec un dispositif d'entrée (105 ; 205) et un dispositif d'affichage ou de sortie (107 ; 207), qui présente au moins une fonction supplémentaire ou de sélection pouvant être activée par le dispositif d'entrée, chaque activation d'une fonction prédéfinie supplémentaire ou de sélection étant enregistrée,
**caractérisé en ce que**
- le résultat de l'enregistrement est soumis à une analyse prédéfinie pour la détermination de fonctions supplémentaires ou de sélection peu utilisées,
- un texte informatif concernant les fonctions supplémentaires ou de sélection non utilisées ou peu utilisées est affiché ou sorti en fonction du résultat de l'analyse.

2. Procédé selon la revendication 1,
**caractérisé en ce que**
l'étape de l'analyse inclut la détermination de la fréquence d'activation de la fonction supplémentaire ou de la fonction de sélection dans une période prédéfinie ou une période de service prédéfinie.

3. Procédé selon la revendication 2,
**caractérisé en ce que**
l'analyse inclut une détermination de tendance concernant la fréquence d'activation dans une période prédéfinie ou une période de service prédéfinie.

4. Procédé selon l'une quelconque des revendications précédentes,
**caractérisé en ce que**
l'étape de l'analyse inclut la détermination d'une période qui s'est écoulée depuis la dernière activation de la fonction supplémentaire ou de la fonction de sélection.

5. Procédé selon l'une quelconque des revendications 2 à 4,
**caractérisé en ce que**
l'étape de l'analyse inclut une comparaison de la fréquence d'activation déterminée et/ou de la tendance déterminée et/ou de la période déterminée avec une valeur de référence appropriée prédéfinie.

6. Appareil électronique (100 ; 200), en particulier terminal téléphonique, comprenant un dispositif d'entrée (105 ; 205) et un dispositif d'affichage ou de sortie (107 ; 207), qui présente au moins une fonction supplémentaire ou une fonction de sélection pouvant être activée par le dispositif d'entrée, un dispositif d'enregistrement de fonction supplémentaire (103 ; 203) pour l'enregistrement de chaque activation de la ou d'une fonction définie supplémentaire ou de sélection et un dispositif d'analyse (109 à 135 ; 209 à 235) relié à la sortie du dispositif d'enregistrement de fonction supplémentaire et à un rythmeur (103 ; 203), pour la détermination d'une grandeur caractérisant le nombre des activations dans une période prédéfinie et pour la sortie d'un signal de sortie approprié étant prévus,
**caractérisé par**
- une mémoire d'informations utilisateur (141 ; 241) pour la mémorisation d'au moins un texte informatif concernant la ou chaque fonction supplémentaire ou fonction de sélection, le texte informatif concernant des fonctions supplémentaires ou des fonctions de sélection non utilisées ou peu utilisées,
- par un dispositif de commande de mémoire (139 ; 239) pour l'adressage de la mémoire d'informations utilisateur pour la sortie du ou d'un texte informatif concernant la ou chacune des fonctions supplémentaires ou de sélection non utilisées ou peu utilisées en fonction du signal de sortie du dispositif d'analyse par le dispositif d'affichage.

7. Appareil selon la revendication 6,
**caractérisé en ce que**
le dispositif d'enregistrement de fonction supplémentaire présente un compteur (109, 111 ; 209) pour l'enregistrement du nombre des activations de la ou de chaque fonction supplémentaire ou fonction de sélection et d'une unité de calcul arithmétique (115, 117 ; 215) montée en aval du compteur et reliée au rythmeur (103 ; 203) pour la détermination de la fréquence d'activation de la fonction supplémentaire ou de la fonction de sélection dans une période prédéfinie.

8. Appareil selon la revendication 6 ou 7,
**caractérisé en ce que**
le dispositif d'analyse présente une mémoire (113 ; 213) pour l'enregistrement du dernier moment d'activation respectif de la fonction supplémentaire ou de la fonction de sélection et un étage de soustraction (133 ; 233) relié à cette mémoire et au rythmeur (103 ; 203) pour la détermination de la période écoulée depuis la dernière activation.

9. Appareil selon l'une quelconque des revendications 6 à 8,
**caractérisé en ce que**
le dispositif d'analyse présente une unité de comparateur (119, 123, 129, 135 ; 219, 235) dans une liaison côté entrée avec une mémoire de valeur de référence (127, 121, 131, 133 ; 227, 237) pour la comparaison de la grandeur mettant le nombre des activations en relation avec une période prédéfinie et pour l'envoi d'un signal de commande approprié au dispositif de commande de mémoire (139 ; 239).
